# EUROPEAN PATENT SPECIFICATION

(11) **EP 0 317 217 B1**
(45) Date of publication and mention of the grant of the patent: **03.03.1993**
(21) Application number: 88310681.7
(22) Date of filing: 11.11.1988
(51) Int. Cl.: C01B 31/10

(54) **Method and apparatus for activating infusibilized pitch beads**
Verfahren und Vorrichtung zum Aktivieren von umschmelzbar gemachten Pechkügelchen
Procédé et appareil pour l'activation de billes de brai rendues infusibles

(30) Priority: 13.11.1987 JP 287056/87
(43) Date of publication of application: 24.05.1989
(73) Proprietor: KUREHA KAGAKU KOGYO KABUSHIKI KAISHA, Chuo-ku Tokyo 103 (JP)
(72) Inventor: Watanabe, Kunio, Iwaki-shi Fukushi-ken (JP); Ishihara, Takao, Iwaki-shi Fukushi-ken (JP); Sakaguchi, Yasuo, Iwaki-shi Fukushi-ken (JP)
(74) Representative: Woods, Geoffrey Corlett

(56) References cited:
- GB-A- 2 013 642
- GB-A- 2 028 368
- GB-A- 2 061 902
- US-E- 29 101

## Description

The present invention relates to a method of calcining and activating infusibilized spherical pitch beads which have been prepared by infusibilizing spherical beads of a petroleum pitch or a coal pitch.

So far, carbon beads or activated carbon beads are manufactured by the methods comprising: (1) blending petroleum pitch or coal pitch with a viscosity-adjusting agent; (2) melt-molding the blend into spheres; (3) extracting the agent by a solvent from the molded; (4) infusibilizing the extracted; (5) calcinating the infusibitized to have carbon beads and (6) activating the beads into activated carbon beads.

Infusibilization of the pitch beads is performed at a temperature not higher than 400°C in the presence of an oxidizing gas, such as, O₂, O₃, SO₃, NO₂, an oxidizing gas diluted with air or nitrogen, or air, oxidizing and thermally infusibilizing the pitch beads. Then, the infusibilized pitch beads obtained are calcinated at a temperature not lower than 600°C in an inactive atmosphere to give carbon beads. Further, by activating the infusibilized spherical pitch beads or the spherical carbon beads with an activating gas, mainly consisting of nitrogen and steam, at a temperature of 800 to 1,200°C, the activated spherical carbon beads are obtained.

When it comes to apparatus to produce spherical carbon beads or spherical activated carbon beads, rotary kiln systems or one-stage batchwise fluidized bed systems have been widely used. However, in the rotary kiln system, there are following problems: namely, the apparatus is too large due to long reaction time and poor volume efficiency of the furnace, low efficiency of operation due to the complicated mechanism to prevent inflow of air to the kiln during high temperature activation and short life of the apparatus due to thermal strain and oxidation of its materials. On the other hand, the one-stage batchwise fluidized bed system is not necessarily a satisfactory one because of long reaction time, large apparatus and high running cost due to high energy consumption and frequent repairs.

As a result of the present inventors' extensive study on a method and an apparatus to activate infusibilized spherical pitch beads easily and in a high yield in order to overcome the above problems, they have found that by treating the infusibilized spherical pitch beads in a furnace comprising a first stage fluidized bed (upper stage) for calcining the pitch beads at 600 to 800°C and a second stage fluidized bed (lower stage) for activating the calcined beads at 800 to 1,200°C, it is possible to increase their yield per unit time, to reduce tower diameter of the furnace and to reduce the energy cost due to a reduction of the reaction time.

Accordingly, the present invention provides a method of calcining and activating infusibilized spherical pitch beads which have been prepared by infusibilizing spherical beads of a petroleum pitch or a coal pitch, characterized in that the beads are calcined at a temperature of 600 to 800°C in a first stage fluidized bed in a furnace and the thus calcined beads are activated in a second stage fluidized bed in the furnace at a temperature of 800 to 1,200°C, an exhaust gas from said second stage fluidized bed being used as it is, to calcine the beads in said first stage fluidized bed and both calcination and activation being carried out in a batchwise mode.

It is thus possible to provide a method to produce the spherical activated carbon beads with good productivity, uniform quality at a relatively low cost and using a more compact apparatus with the same productive capacity compared to conventional methods.

In the accompanying drawing:

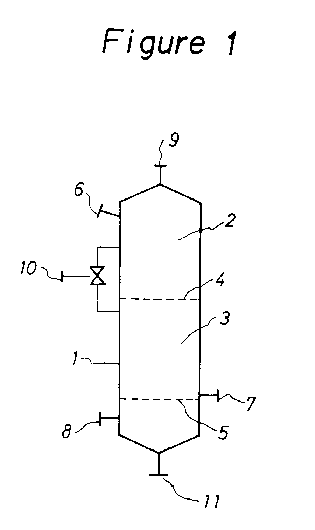

Figure 1 is a rough sketch of one embodiment of a calcining and activating furnace of the present invention. However, the present invention is not necessarily restricted by the drawing.

In Figure 1:
- 1.: a main body of the activating furnace with a two-stage fluidized bed,
- 2.: a first stage fluidized bed,
- 3.: a second stage fluidized bed,
- 4.: a perforated plate of the first stage fluidized bed,
- 5.: a perforated plate of the second stage fluidized bed,
- 6.: an inlet of infusibilized spherical pitch beads,
- 7.: an outlet of activated carbon beads,
- 8.: an inlet of an activating gas,
- 9.: an outlet of an exhausted gas,
- 10.: a bypass valve, and
- 11.: a drainage.

The present invention relates to a method for activating infusibilized spherical pitch beads, which method uses the two stage fluidized bed furnace calcining and activating the infusibilized spherical pitch beads. The beads may be obtained by mixing a viscosity-adjusting agent with a petroleum pitch, a coal pitch or a mixture thereof, molding the mixture into spheres, extracting and removing the agent from the molded beads with a solvent, typically an organic solvent, and then infusibilizing the beads with air or another oxidant. More specifically, the infusibilized spherical pitch beads have been obtained by:
(1) preparing spherical beads from a mixture of 100 parts by weight of a petroleum pitch, a coal pitch or a mixture thereof and 5 to 50 parts by weight of a viscosity-adjusting agent selected from bicyclic and tricyclic aromatic compounds and mixtures thereof,
(2) removing the viscosity-adjusting agent from the beads, and
(3) subsequently infusibilizing the beads.

As to the pitch used in the present invention, a petroleum pitch or a coal pitch is used. As to the petroleum pitch, for instance, a pitch formed by thermal cracking of petroleum (crude oil, heavily oil, naphtha, asphalt, light oil or kerosene) or a thermally polymerized substance thereof is exemplified. As to the coal pitch, a heavy substance such as high pitch or medium pitch is exemplified. The softening point of these pitches are preferably not lower than 140°C.

As to the viscosity-adjusting agent, a bicyclic or tricyclic aromatic compound having a boiling point of not lower than 200°C and a good compatibility with the pitch is used, for example, the viscosity-adjusting agent maybe selected from naphthalene, methylnaphthalene, phenylnaphthalene, benzylnaphthalene, methylanthracene, phenanthrene biphenyl, or a mixture of two or more thereof. Of these compounds, naphthalene is particularly preferable from the viewpoint of its remarkably large activity to adjust viscosity and its ability to be easily extracted with a solvent. The amount of the viscosity-adjusting agent is properly controlled depending on properties of the pitch.

Melt-molding of the pitch is usually performed by known, conventional methods. For instance, to obtain spherical pitch beads, a method in which a molten mixture of a viscosity-adjusting agent and a pitch is stirred in water containing a surfactant under pressure and the mixture is molded into spheres or a method disclosed in US-A-4,420,443 wherein the molten mixture of the agent and pitch is extruded into a string and afterwards cooled, crushed into pellets or rods, is used. The obtained pellets or rods are heated to a temperature higher than their softening point and are thrown into water to mold the mixture in spheres.

From the obtained spherical pitch beads, the viscosity-adjusting agent is extracted and removed with an organic solvent according to the known method disclosed in, for instance, GB-A-1,383,085 and US-E-29,101. As to the organic solvent, an aliphatic hydrocarbon, such as hexane, heptane, methanol or ethanol is used. The agent can be extracted and removed in one step or multiple steps.

By oxidising the porous and spherical pitch beads by an oxidant at a temperature not higher than 400°C, porous and infusible spherical pitch beads, which are thermally infusible, are obtained. As to the oxidant for the infusibilization, an oxidative gas such as O₂, O₃, SO₃, NO₂, an oxidative gas diluted with air or nitrogen, or air is used. Although the infusibilized spherical pitch beads obtained by this method still contain particles of not larger than 0.21 mm and larger than 0.78 mm in diameter, the particle size distribution is remarkably uniform and the majority have diameters in the range of 0.40 to 0.78 mm.

Preferably the pitch beads are introduced into the first stage fluidized bed immediately after infusibilization.

The infusibilized spherical pitch beads are thrown into a space for the first stage (upper stage) fluidized bed of the two-stage fluidized bed furnace and are heated from, usually, 300°C to about 470°C instantly while being fluidised by a gas from the lower fluidized bed, and thereafter, the heated pitch beads are further heated to a predetermined temperature between 600 and 800°C, preferably 650 and 750°C.

The temperature of the first stage fluidized bed in which the pitch beads are provided for calcining is raised to a predetermined temperature, which is between 600 and 800°C, at a rate of 50 to 100°C/hour between 470 and 650°C and a rate of 20 to 50°C/hour between 650 and 800°C and after the predetermined temperature is reached the beads are heated for 0.5 to 18 hours with a temperature raising rate of 2 to 8°C/hour. More preferably after the predetermined temperature is reached the beads are heated with a temperature rising rate of 4 to 6°C/hour for 0.5 to 8.0 hours.

As to the time when the calcinating reaction in the first stage is finished, the activating reaction in the second stage has already been completed and thereafter the activated carbon beads are discharged through the outlet placed at a side wall of the furnace while maintaining fluidization and the hot activated carbon discharged is cooled near to room temperature by passing through a cooler (not shown in Figure 1) placed outside the furnace. After the discharge is complete, the gas from the second stage is guided to the first stage through the bypass line, not through the perforated plate of the first stage. As a result, fluidization of the carbon beads calcinated is stopped and the beads go down to the second stage through the holes of the perforated plate. Thereafter, the carbon beads in the second stage are to be fluidized with a gaseous mixture of nitrogen and steam, which is preheated by an outside heater (not shown in Figure 1), to be activated at a temperature of 800 to 1,200°C.

The temperature of the second stage fluidized bed in which the calcined beads are provided for activation is raised at a rate of 10 to 100°C/hr, preferably 20 to 70°C/hr between 600°C and a predetermined temperature which is not lower than 800°C and thereafter at a rate of 1 to 5°C/hr, preferably 2.5 to 4.0°C/hr, for not longer than 18 hours provided that the maximum temperature is not higher than 1,200°C.

To control both the temperatures of the first and second stages as described above simultaneously, the temperature and the flow rate of activating gas to be introduced to the second stage should be adjusted so as to satisfy the temperature raising profile of the first stage fluidizing bed, and as a result, the profile of the upper fluidizing bed is automatically satisfied. Although the flow rate of the activating gas depends on an amount of the infusibilized pitch beads charged and the size of the furnace (height and diameter of the fluidized bed), it is necessary to maintain the gas flow rate in the range of not larger than the terminal fluidization gas velocity for the beads in the second stage and of not smaller than the minimum fluidization gas velocity of the beads in the first stage. Further, an amount of the pitch beads to be charged is determined according to their treating time and an amount of the activated carbon to be produced, and relating to said amount of the pitch beads to be charged, an inlet temperature of the activating gas, which can treat at an adequate temperature the pitch beads too, is determined by the heat balance in the furnace.

Practically, an inlet temperature of activating gas is increased, for example, at a raising rate of 50 to 300°C/hr, preferably 100 to 200°C/hr, from the initial temperature of 800°C to a predetermined temperature between 1,000 to 1,400°C and maintained at said predetermined temperature during the reaction. To adjust the inlet gas temperature, the gas is heated in a heater (not shown in Figure 1) outside the furnace with a high temperature combustion gas as a heating medium or electric heater before entering into the furnace. As to the gas used for calcining and activating the beads, steam, carbon dioxide or a gaseous mixture of either of these gases and nitrogen or oxygen is commonly used. A mixture containing nitrogen and not less than 50 % by volume of steam is preferably used for activation of the calcined beads in the second stage fluidized bed.

During fluidization of the beads in the first stage, if the beads fall down through holes of the perforated plate to the second stage, the beads having different reaction time are mixed and as a result an activated carbon having uniform capacity cannot be obtained. Further, shorter transfer time of the beads from the first stage to the second, after the reactions are over, is preferable. To this end, the first stage fluidized bed is positioned above the second stage fluidized bed, substantially none of the beads in the first stage fluidized bed fall down to the second stage fluidized bed during calcination, substantially all the beads fall down to the second stage fluidized bed through the holes of a perforated plated in the first stage fluidized bed at the end of calcination reaction, the beads in the second stage fluidized bed do not fall down through the holes of a perforated plate in the second stage fluidized bed during activation and substantially all the activated carbon beads thus produced are discharged out of the furnace after the activation reaction.

The first stage fluidized bed has a perforated plate containing holes of a caliber of 2.0 to 6.0 mm, preferably 3.0 to 5.0 mm, and an opening ratio of 1.0 to 3.0 %, preferably 1.5 to 2.0 %, and the second stage fluidized bed has a perforated plate containing holes of a caliber of 1.0 to 2.0 mm and having an opening ratio of 1.0 to 3.0 %. Preferably the pitch beads have a diameter of 0.2 to 1.0 mm.

To have the spherical activated carbon beads of uniform quality, it is necessary to make the gas distribution uniform and blending of the beads excellent.

Particularly, for a system with large capacity, as the height of fluidizing layer must be high from the view point of productivity, determination of the adequate caliber size of holes of the perforated plate becomes important to secure good fluidization of the beads with good distribution of the gas. By applying the plates having the holes described above in the respective stage, each stage can have a good fluidization with the beads layer of its height, in a stationary and not fluidizing state, up to 1,000 mm. Further, to have a good distribution of the gas at each fluidizing layer, and to prevent the beads falling down through the holes of the each plate, it is reasonable that each plate must be even and flat. To maintain its evenness and flatness under a high temperature, it is preferable to have a compact size of the furnace from the view point of material strength. As the conventional one-stage fluidizing bed system has a temperature difference between the start of calcination and the end of activation as large as 500 to 600°C at minimum, difficultly in selecting materials to resist such severe heat shock and short life becomes a problem and accordingly, long and stable operation and the saving of the repair costs also become difficult points to be solved.

To solve these points, although expensive heat-resistant and anticorrosive materials have been used so far as the materials of the furnace, for the reduction of the repair costs and the long term stabilized operation of the system to activate the infusibilized spherical pitch beads in the one-stage fluidized bed, it is desired to raise the temperature slowly from a temperature at the end of the infusibilization to a temperature of activation at a rate of 50°C/hr to lower the temperature of activation as low as possible, and accordingly the reaction time becomes inevitably longer. On the other hand, according to the method of the present invention, comparing with the conventional one-stage fluidized bed of 500 to 3,500 mm in diameter and of not more than 1,000 mm in height in the stationary state, the diameter of the furnace of the present invention is about 0.7 times that of the conventional system having the same capacity. Namely, size of the furnace and its area for installation is small. However, as the system of the present invention is operated batchwise, the height of the furnace is about two times that of the conventional one having the same amount of beads in it. By making the diameter of the furnace small, its structural strength becomes larger than that of the conventional one-stage fluidized bed system. If the same material of the same thickness is used, the activation reaction at a higher temperature becomes possible and the reactions from carbonization to activation are completed within the time period of not more than 2/3 of that of the conventional one. In other words, the amount of production per unit time, for instance, about 80 kg/hr in the conventional method, increases making it possible to produce 120 to 150 kg/hr by the method of the present invention with the furnace of the same diameter.

In the activating system according to the present invention, by dividing the furnace into two stages, namely making the upper part of the furnace as a part calcining at 600 to 800°C and making the lower part as a part activating at 800 to 1,200°C, it has become possible to keep the temperature difference between the upper part and the lower part at about 400°C in the period between the start and the end of the reaction and accordingly the heat shock suffered by the wall of the furnace is remarkably reduced, namely, the temperature difference between the start and the end of the total reaction of the present invention is about 400°C less than that of the conventional one-stage fluidized bed system.

Additionally, by making the diameter of the furnace smaller, it has become possible to perform the activation at a higher temperature as has been described above, to reduce the thickness of material for construction, to select economical materials from the wide range and to have the material of long life. Moreover, since the calcination in the first stage fluidized bed is performed by the gas from the second stage, most of the energy consumed for calcination in the conventional one-stage fluidized bed system to raise the temperature from 600 to 800°C and also the amount of the gas can be reduced remarkably. Namely, the energy cost can largely be reduced. Further, even when the gas from the lower (second) stage contains steam, since the calcination temperature in the upper (first) stage is kept at not higher than 800°C and at this temperature practically no activation reaction occurs, the activation reaction seldom proceeds in the first stage but mostly in the second stage. Accordingly, as almost all the infusibilized pitch beads are only calcinated in the first stage, the activated carbon beads with uniform qualities can be obtained by the system of the present invention.

The qualities of the spherical activated carbon beads obtained by the two-stage fluidized bed activation method of the present invention are equivalent as those of the activated carbon beads obtained by the conventional rotary kiln system or the fluidized bed system. By the way, since the infusibilized pitch beads have been treated at the temperature of not higher than 400°C, when such beads are treated at a temperature between 400 and 600°C, a sticky tar-like substance is likely to be generated.

In the conventional multistage continuous fluidized bed system, since there is at least one region in which the infusibilized pitch beads are treated at the temperature up to 600°C, some of the holes of the perforated plate, which are provided to keep a good fluidization of the beads, are blocked by the tar-like substance generated and make the fluidization not uniform and finally lead to a disturbance in the stable and long term operation of the system. Additionally, in the conventional multistage continuous fluidized bed system, since the residence time of each bead in each stage cannot be uniform because of a continuous operation, the result is a large variation in the quality of the product. Accordingly, it is deemed that the conventional multistage continuous fluidized furnace is good as a regenerating furnace in which the calcination and activation are not so important, but not good as a furnace to activate the infusibilized spherical pitch beads.

In contrast to the conventional multistage continuous fluidized bed system which is likely to have a perforated plate with partially blocked holes by the tar-like substance, the two-stage fluidized bed system of the present invention has no generation of tar-like substance since the temperature of the first stage is not lower than 600°C and has no risk to have blocked holes of the plate and accordingly capable of long and stable operation with a good and uniform fluidization.

The spherical activated carbon beads obtained by the two-stage fluidized bed batchwise activation method according to the present invention are effectively used in the treatment of various gases, treatment of industrial waste water, purification of drinking water, desulfurization of exhaust gases and purification of the blood in the artificial human organs.

The present invention also provides an apparatus suitable for calcining and activating infusibilized spherical pitch beads batchwisely according to the method of the present invention, which has a tower constriction and which comprises:
(a) a first stage fluidized bed which is provided with an inlet for infusibilized pitch beads and a waste gas outlet in the upper part thereof and with a perforated plate having plurality of holes thought which the fluidization gas can pass and, when the fluidization is stopped, the beads can pass;
(b) a second stage fluidized bed directly underneath the first stage fluidized bed, which is provided with a perforated plate having plurality of holes through which fluidization gas can pass and with a bead outlet in the bottom part thereof;
(c) a hollow portion directly underneath to the bottom of the second stage fluidized bed at the outer side of the main body of the furnace having a gas valve in the middle part thereof; and
(d) a bypass line from the second stage fluidized bed section to the first stage fluidized bed section having a bypass valve on it.

### EXAMPLE 1:

100 parts by weight of a pitch, which had been prepared by thermal cracking of naphtha, having a softening point of 182°C and H/C (ratio in numbers of hydrogen atom to carbon atom) of 0.53 and containing 10% by weight of a quinoline-insoluble component, and 33 parts by weight of naphthalene were heated, melted and mixed, and the mixture was cooled to 80 to 90°C and was extruded to a string-like pitch and thereafter, crushed into a rod-like pitch. The rod-like pitch was softened in an aqueous 0.5% solution of polyvinyl alcohol heated to 90°C, stirred and dispersed in the aqueous solution. The dispersion was cooled to form a slurry of the spherical pitch beads.

After screening the formed pitch beads into the range of particle diameter of 210 to 1,000 µm, naphthalene which had been used as a viscosity-adjusting agent was extracted by n-hexane.

Then, the pitch beads were infusibilized in the fluidized bed by being oxidized with air at 300°C. The obtained, infusibilized spherical pitch beads were introduced into the space for first-stage fluidized bed of the two-stage fluidized bed activating furnace of 2,200 mm in diameter and 7,500 mm in total height (the height of each stationary layer of the first and second stages are about 900 mm, respectively), heated from 300°C to about 470°C instantly, further heated to 600°C at a temperature raising rate of 50°C/hr and then calcinated for about 6.5 hours at a temperature raising rate of 5°C/hr, by a gaseous mixture of steam and nitrogen (1:1 by volume).

Thereafter, the most part of the gas coming from the second stage was guided to the first stage through bypass line and the spherical carbon beads (the calcined beads) fall down to the space for second-stage fluidized bed. The average particle diameter of the carbon beads was 600 µm and the particles were spherical in their shape.

### EXAMPLE 2:

The spherical carbon beads obtained in Example 1 were heated in the second-stage fluidized bed of the furnace of Example 1 by an activating gas (consisting of steam and nitrogen of the volume ratio of ,1:1) from the initial temperature of 600°C to 870°C at a temperature raising rate of 50°C/hr, and were activated for 4 hours at a temperature raising rate of 3.0°C/hr. After the activation, the spherical activated carbon beads were discharged through the outlet.

The output of the activated carbon beads per unit time was 140 kg/hr.

During the activation, any blocking of the perforated plate in the first-stage fluidized bed was not observed.

Further, the properties of the obtained spherical activated carbon beads were as follows:
The yield of activation was 40%, the apparent density was 0.58 g/ml, the iodine-adsorbing amount was 1,200 mg/g and the caramel decolorization ratio was 88%.

### COMPARATIVE EXAMPLE 1:

The infusibilized spherical pitch beads obtained in Example 1 were heated from 300°C to 810°C in the one-stage batchwise fluidized bed of 3,450 mm in diameter and 5,000 mm in total height (the height of the stationary layer is 900 mm) by using an activating gas consisting of steam and nitrogen (volume ratio of 1:1) and were kept at that temperature for 14 hours to be activated and the spherical activated carbon beads were obtained.

The amount of production of the product per unit time was 83 kg/hr. The properties of the spherical activated carbon beads were as follow:
Shape of the beads was spherical with an average particle diameter of 600 µm, the apparent density was 0.60 g/ml, the iodine-adsorbing amount was 1,100 mg/g and the caramel decolorization ratio was 85%.

### EXAMPLE 3:

The infusibilized spherical pitch beads obtained in Example 1 were calcined and activated in the two-stage fluidized bed activating furnace of Example 1 while using a gaseous mixture consisting of steam and nitrogen in the volume ratio of 7:3 as the activating gas to obtain the spherical activated carbon beads.

The temperature of the activating gas, at the entrance, was 800°C at the start and was raised to 1,100°C. The temperature within the second-stage fluidized bed was 720°C at the beginning and was raise to 820°C at the rate of 50°C/hr and then the beads were treated for 6 hours at the rate of 3.0°C/hr.

The temperature of the first-stage fluidized bed was started from 300°C and was raised to 480°C instantly, and after that, the temperature was slowly raised and the final temperature was 720°C. The reaction time in each stage was 8 hours, and it means that the beads were treated for 16 hours as the total reaction time. The amount of production of the beads per unit time was 125 kg/hr. The properties of the obtained spherical activated carbon beads were as follows:
The average particle diameter was 600 µm, the yield of activation was 40%, the apparent density was 0.58 g/ml, the iodine-adsorbing amount was 1,200 mg/g and the caramel decolorization ratio was 86%.

### COMPARATIVE EXAMPLE 2:

The infusibilized spherical pitch beads obtained in Example 1 were heated from 300°C to 810°C in the one-stage batchwise fluidized bed of Comparative Example 1 while using an activating gas consisting of steam and nitrogen in a volume ratio of 7:3 and were kept for 15 hours at 810°C to be activated and obtained the spherical activated carbon beads. The output of the beads per unit time was 80 kg/hr. The properties of the spherical activated carbon beads were as follows:
The average particle diameter was 600µm, the apparent density was 0.58 g/ml, the iodine-adsorbing amount was 1,200 mg/g and the caramel decolorization ratio was 87%.

Figure 1 of the attached drawing is a rough sketch which gives one example of the activating furnace used in the present invention conceptionally.

The outline of the activating furnace is explained as follows:
The preliminarily heated activating gas is introduced into the furnace usually through an inlet 8 of the activating gas and is discharged through an outlet 9 while passing through the space for second stage fluidized bed 3 and the space for first stage fluidized bed 2.

A predetermined amount of the infusibilized spherical pitch beads is introduced into the furnace from an inlet 6 of the beads, and the beads form the fluidized bed in 2 and are calcined. After discharging all the spherical activated carbon beads in the second fluidized bed 3 out of the furnace through an outlet 7, the bypass valve 10 is opened so that the gas goes into 2 through the bypass line and the fluidization in 2 is stopped and the carbonized beads flow down through the holes of the perforated plate 4 to 3. The beads form a fluidized bed in 3 and the activation reaction starts.

At the time when the transfer of the carbonized beads from 2 to 3 is finished, the infusibilized spherical pitch beads are introduced into 2 again after closing 10.

By repeating the batchwise operation as has been described above, the infusibilized spherical pitch beads are uniformly activated.

Further 4 and 5 respectively show the perforated plates in the first and the second-stage fluidized beds, 1 shows the main body of the two-stage fluidized activating furnace and 11 shows the scupper of the drain and the spherical beads which come through the perforated plate 5 of the second-stage fluidized bed by chance.

## Claims

1. A method of calcining and activating infusibilized spherical pitch beads which have been prepared by infusibilizing spherical beads of a petroleum pitch or a coal pitch, characterized in that the beads are calcined at a temperature of 600 to 800°C in a first stage fluidized bed in a furnace and the thus calcined beads are activated in a second stage fluidized bed in the furnace at a temperature of 800 to 1,200°C, an exhaust gas from said second stage fluidized bed being used, as it is, to calcine the beads in said first stage fluidized bed and both calcination and activation being carried out in a batchwise mode.

2. A method according to claim 1 wherein a mixture of nitrogen and not less than 50% by volume of steam is used for activation of the calcined beads in the second stage fluidized bed.

3. A method according to any one of the preceding claims wherein the temperature of the first stage fluidized bed in which the pitch beads are provided for calcining is raised to a predetermined temperature, which is between 600 and 800°C, at a rate of 50 to 100°C/hour between 470 and 650°C and a rate of 20 to 50°C/hour between 650 and 800°C and after the predetermined temperature is reached the beads are heated for 0.5 to 18 hours with a temperature raising rate of 2 to 8°C/hour.

4. A method according to any one of the preceding claims wherein the temperature of the second stage fluidized bed in which the calcined beads are provided for activation is raised at a rate of 10 to 100°C/hour between 600°C and a predetermined temperature which is not lower than 800°C and thereafter at a rate of 1 to 5 °C/hour for not longer than 18 hours provided that the maximum temperature is not higher than 1,200°C.

5. A method according to any one of the preceding claims wherein the infusibilized spherical pitch beads have been obtained by:
(1) preparing spherical beads from a mixture of 100 parts by weight of a petroleum pitch, a coal pitch or a mixture thereof and 5 to 50 parts by weight of a viscosity-adjusting agent selected from bicyclic and tricyclic aromatic compounds and mixtures thereof,
(2) removing the viscosity-adjusting agent from the beads, and
(3) subsequently infusibilizing the beads.

6. A method according to claim 5 wherein the viscosity-adjusting agent is naphthalene, methylnaphthalene, phenylnaphthalene, benzylnaphthalene , methylanthracene, phenanthrene, biphenyl or a mixture of two or more thereof.

7. A method according to any one of the preceding claims wherein the first stage fluidized bed has a perforated plate containing holes of a caliber of 2.0 to 6.0 mm and having an opening ratio of 1.0 to 3.0% and the second stage fluidized bed has a perforated plate containing holes of a caliber of 1.0 to 2.0 mm and having an opening ratio of 1.0 to 3.0%.

8. A method according to any one of the preceding claims wherein the pitch beads are introduced into the first stage fluidized bed immediately after infusibilization.

9. A method according to any one of the preceding claims wherein the first stage fluidized bed is positioned above the second stage fluidized bed, substantially none of the beads in the first stage fluidized bed fall down to the second stage fluidized bed during calcination, substantially all the beads fall down to the second stage fluidized bed through the holes of a perforated plate in the first stage fluidized bed at the end of calcination reaction, the beads in the second stage fluidized bed do not fall down through the holes of a perforated plate in the second stage fluidized bed during activation and substantially all the activated carbon beads thus produced are discharged out of the furnace after the activation reaction.

10. A method according to any one of the preceding claims wherein the pitch beads have a diameter of 0.2 to 1.0 mm.

11. An apparatus suitable for calcining and activating infusibilized spherical pitch beads batchwisely according to the method defined in any one of the preceding claims, which has a tower construction and which comprises:
(a) a first stage fluidized bed which is provided with an inlet for infusibilized pitch beads and a waste gas outlet in the upper part thereof and with a perforated plate having plurality of holes through which the fluidization gas can pass and, when the fluidization is stopped, the beads can pass;
(b) a second stage fluidized bed directly underneath the first stage fluidized bed, which is provided with a perforated plate having plurality of holes through which fluidization gas can pass and with a bead outlet in the bottom part thereof;
(c) a hollow portion directly underneath to the bottom of the second stage fluidized bed at the outer side of the main body of the furnace having a gas valve in the middle part thereof; and
(d) a bypass line from the second stage fluidized bed section to the first stage fluidized bed section having a bypass valve on it.

## Patentansprüche

1. Verfahren zum Glühen und Aktivieren unschmelzbar gemachter sphärischer Pechkügelchen, welche durch Unschmelzbarmachen sphärischer Kügelchen aus einem Petrolpech oder einem Kohlepech hergestellt worden sind, dadurch **gekennzeichnet**, daß die Kügelchen bei einer Temperatur von 600 bis 800°C in einem Fließbett der ersten Stufe in einem Ofen geglüht werden, und die auf diese Weise geglühten Kügelchen in einem Fließbett der zweiten Stufe in dem Ofen bei einer Temperatur von 800 bis 1200°C aktiviert werden, wobei ein Abgas aus dem Fließbett der zweiten Stufe, so wie es ist, für das Glühen der Kügelchen in dem Fließbett der ersten Stufe verwendet wird, und sowohl das Glühen wie auch das Aktivieren in chargenartiger Betriebsweise durchgeführt werden.

2. Verfahren nach Anspruch 1, bei dem eine Mischung aus Stickstoff und nicht weniger als 50 Vol.-% Dampf für die Aktivierung der geglühten Kügelchen in dem Fließbett der zweiten Stufe verwendet wird.

3. Verfahren nach einem der vorhergehenden Ansprüche, bei dem die Temperatur des Fließbetts der ersten Stufe, in das die Pechkügelchen zum Glühen gebracht werden, auf eine vorbestimmte Temperatur, welche zwischen 600 und 800°C liegt, mit einer Geschwindigkeit von 50 bis 100°C/h zwischen 470 und 650°C und mit einer Geschwindigkeit von 20 bis 50°C/h zwischen 650 und 800°C angehoben wird, und wobei nach Erreichung der vorbestimmten Temperatur die Kügelchen 0,5 bis 18 Stunden mit einer Temperaturanstiegsgeschwindigkeit von 2 bis 8°C/h erhitzt werden.

4. Verfahren nach einem der vorhergehenden Ansprüche, bei dem die Temperatur des Fließbetts der zweiten Stufe, in das die geglühten Kügelchen für die Aktivierung gebracht werden, mit einer Geschwindigkeit von 10 bis 100°C/h zwischen 600°C und einer vorbestimmten Temperatur, welche nicht niedriger als 800°C ist, angehoben wird, und anschließend mit einer Geschwindigkeit von 1 bis 5°C/h nicht länger als 18 Stunden angehoben wird, vorausgesetzt, daß die maximale Temperatur nicht höher als 1200°C ist.

5. Verfahren nach einem der vorhergehenden Ansprüche, bei dem die unschmelzbar gemachten sphärischen Pechkügelchen erhalten worden sind durch:
(1) Herstellen sphärischer Kügelchen aus einer Mischung aus 100 Gew.-Teilen eines Petrolpechs, eines Kohlepechs oder einer Mischung davon und 5 bis 50 Gew.-Teilen eines viskositätseinstellenden Mittels, ausgewählt aus bizyklischen und trizyklischen aromatischen Verbindungen und Mischungen davon,
(2) Entfernen des viskositätseinstellenden Mittels von den Kügelchen und
(3) anschließendes Unschmelzbarmachen der Kügelchen.

6. Verfahren nach Anspruch 5, bei dem das Viskositätseinstellungsmittel Naphthalin, Methylnaphthalin, Phenylnaphthalin, Benzylnaphthalin, Methylanthracen, Phenanthren, Biphenyl oder eine Mischung aus zwei oder mehreren davon ist.

7. Verfahren nach einem der vorhergehenden Ansprüche, bei dem das Fließbett der ersten Stufe eine durchlöcherte Platte, die Löcher mit einem Bohrungsdurchmesser von 2,0 bis 6,0 mm und mit einem Öffnungsverhältnis von 1,0 bis 3,0 % enthält, aufweist, und das Fließbett der zweiten Stufe eine perforierte Platte, die Löcher mit einem Bohrungsdurchmesser von 1,0 bis 2,0 mm und mit einem Öffnungsverhältnis von 1,0 bis 3,0 % enthält, aufweist.

8. Verfahren nach einem der vorhergehenden Ansprüche, bei dem die Pechkügelchen in das Fließbett der ersten Stufe sofort nach dem Unschmelzbarmachen eingebracht werden.

9. Verfahren nach einem der vorhergehenden Ansprüche, bei dem das Fließbett der ersten Stufe oberhalb des Fließbettes der zweiten Stufe angeordnet ist, im wesentlichen keines der Kügelchen des Fließbettes der ersten Stufe in das Fließbett der zweiten Stufe während des Glühens herabfällt, im wesentlichen alle Kügelchen in das Fließbett der zweiten Stufe durch die Löcher einer perforierten Platte in dem Fließbett der ersten Stufe am Ende der Glühreaktion herabfallen, die Kügelchen in dem Fließbett der zweiten Stufe nicht durch die Löcher einer perforierten Platte in dem Fließbett der zweiten Stufe während der Aktivierung herabfallen, und im wesentlichen alle auf diese Weise hergestellten Aktivkohlekügelchen nach der Aktivierungsreaktion aus dem Ofen entladen werden.

10. Verfahren nach einem der vorhergehenden Ansprüche, bei dem die Pechkügelchen einen Durchmesser von 0,2 bis 1,0 mm aufweisen.

11. Für das chargenweise Glühen und Aktivieren unschmelzbar gemachter sphärischer Pechkügelchen gemäß dem in einem der vorhergehenden Ansprüche definierten Verfahren geeignete Vorrichtung, welche eine Turmstruktur hat und umfaßt:
(a) ein Fließbett der ersten Stufe, welches mit einem Einlaß für unschmelzbar gemachte Pechkügelchen und einem Abgasauslaß in dem oberen Teil davon und mit einer perforierten Platte mit einer Vielzahl von Löchern, durch die das Fluidisierungsgas entweichen kann und nach Beendigung der Fluidisierung die Kügelchen fließen können, versehen ist;
(b) ein Fließbett der zweiten Stufe direkt unterhalb des Fließbettes der ersten Stufe, welches mit einer perforierten Platte mit einer Vielzahl von Löchern, durch die das Fluidisierungsgas fließen kann und mit einem Kügelchenauslaß in dem untersten Teil davon versehen ist;
(c) ein Hohlteil direkt unterhalb des Bodens des Fließbettes der zweiten Stufe an der Außenseite des Hauptteils des Ofens mit einem Gasventil in dem Mittelteil davon; und
(d) eine Ausweichleitung von dem Fließbettabschnitt der zweiten Stufe zu dem Fließbettabschnitt der ersten Stufe mit einem Bypaßventil darauf.

## Revendications

1. Procédé de calcination et d'activation de perles de brai sphériques rendues infusibles, qui ont été préparées en rendant infusibles des perles sphériques d'un brai de pétrole ou d'un brai de houille, caractérisé en ce que les perles sont calcinées à une température de 600 à 800 °C dans un lit fluidisé de premier étage à l'intérieur d'un four, et les perles ainsi calcinées sont activées dans un lit fluidisé de deuxième étage à l'intérieur du four, à une température de 800 à 1 200 °C, un gaz d'évacuation issu du lit fluidisé de deuxième étage étant employé en l'état pour calciner les perles dans le lit fluidisé de premier étage, et tant la calcination que l'activation étant effectuées de façon discontinue.

2. Procédé selon la revendication 1, dans lequel on emploie un mélange d'azote et de pas moins de 50 % en volume de vapeur d'eau, pour activer les perles calcinées dans le lit fluidisé de deuxième étage.

3. Procédé selon l'une quelconque des revendications précédentes, dans lequel la température du lit fluidisé de premier étage dans lequel les perles de brai sont introduites pour être calcinées, est accrue jusqu'à une température prédéterminée qui est de 600 à 800 °C, selon une vitesse de 50 à 100 °C/h de 470 à 650 °C, et selon une vitesse de 20 à 50 °C/h de 650 à 800 °C, et après avoir atteint la température prédéterminée, les perles sont chauffées pendant 0,5 à 18 heures selon une vitesse d'élévation de la température de 2 à 8 °C/h.

4. Procédé selon l'une quelconque des revendications précédentes, dans lequel la température du lit fluidisé de deuxième étage dans leque les perles calcinées sont introduites pour être activées, est accrue selon une vitesse de 10 à 100 °C/h de 600 °C jusqu'à une température prédéterminée qui n'est pas inférieure à 800 °C, puis selon une vitesse de 1 à 5 °C/h pendant pas plus longtemps que 18 heures, à condition que la température maximum ne soit pas supérieure à 1 200 °C.

5. Procédé selon l'une quelconque des revendications précédentes, dans lequel les perles de brai sphériques rendues infusibles, ont été obtenues :
(1) en préparant des perles sphériques à partir d'un mélange de 100 parties en poids d'un brai de pétrole, d'un brai de houille ou d'un mélange de ceux-ci, et de 5 à 50 parties en poids d'un agent d'ajustement de la viscosité, choisi parmi les composés aromatiques bicycliques et tricycliques et les mélanges de ceux-ci,
(2) en séparant l'agent d'ajustement de la viscosité des perles, et
(3) en rendant ensuite les perles infusibles.

6. Procédé selon la revendication 5, dans lequel l'agent d'ajustement de la viscosité est le naphtalène, le méthylnaphtalène, le phénylnaphtalène, le benzylnaphtalène, le méthylanthracène, le phénanthrène, le biphényle ou un mélange d'au moins deux de ceux-ci.

7. Procédé selon l'une quelconque des revendications précédentes, dans lequel le lit fluidisé de premier étage comprend une plaque perforée contenant des trous d'une taille de 2,0 à 6,0 mm et ayant un taux d'ouverture de 1,0 à 3,0 %, et le lit fluidisé de deuxième étage comprend une plaque perforée comportant des trous d'une taille de 1,0 à 2,0 mm et ayant un taux d'ouverture de 1,0 à 3,0 %.

8. Procédé selon l'une quelconque des revendications précédentes, dans lequel les perles de brai sont introduites dans le lit fluidisé de premier étage, immédiatement après l'infusibilisation.

9. Procédé selon l'une quelconque des revendications précédentes, dans lequel le lit fluidisé de premier étage est disposé au-dessus du lit fluidisé de deuxième étage, pratiquement aucune des perles dans le lit fluidisé de premier étage ne chutant dans le lit fluidisé de deuxième étage au cours de la calcination, pratiquement la totalité des perles chutant dans le lit fluidisé de deuxième étage à travers les trop d'une plaque perforée, dans le lit fluidisé de premier étage à la fin de la réaction de calcination, les perles dans le lit fluidisé de deuxième étage ne chutant pas à travers les trous d'une plaque perforée, dans le lit fluidisé de deuxième étage en cours d'activation, et pratiquement la totalité des perles de carbone activé ainsi produites, étant évacuée du four après la réaction d'activation.

10. Procédé selon l'une quelconque des revendications précédentes, dans lequel les perles de brai ont un diamètre de 0,2 à 1,0 mm.

11. Appareil destiné à calciner et à activer des perles de brai sphériques rendues infusibles, de manière discontinue selon le procédé défini dans l'une quelconque des revendications précédentes, comprenant une tour, et :
(a) un lit fluidisé de premier étage pourvu d'un orifice d'entrée de perles de brai rendues infusibles et d'un orifice de sortie de gaz résiduaires à sa partie supérieure, et d'une plaque perforée comportant plusieurs trous à travers lesquels le gaz de fluidisation peut passer et à travers lesquels les perles peuvent passer lorsque la fluidisation est arrêtée ;
(b) un lit fluidisé de deuxième étage disposé directement sous le lit fluidisé de premier étage, pourvu d'une plaque perforée comportant plusieurs trous à travers lesquels le gaz de fluidisation peut passer, et d'un orifice de sortie de perles prévu à sa partie inférieure ;
(c) une partie creuse disposée directement sous la partie inférieure du lit fluidisé de deuxième étage, à l'extérieur du corps principal du four comportant une vanne à gaz dans sa partie centrale ; et
(d) une conduite de dérivation s'étendant de la section du lit fluidisé de deuxième étage à la section du lit fluidisé de premier étage, comprenant une vanne de dérivation.
